# EUROPEAN PATENT APPLICATION

(11) **EP 4 793 666 A1**
(43) Date of publication of application: **19.08.2026**
(21) Application number: 24878873.9
(22) Date of filing: 09.10.2024
(51) Int. Cl.: G01S 17/88, G01S 13/88, G01S 7/48, G01S 7/481, G01S 7/02

(54) **TESTING METHOD AND RELATED DEVICE**

(30) Priority: 16.10.2023 CN 202311345908
(71) Applicant: Yinwang Intelligent Technologies Co., Ltd., Shenzhen, Guangdong 518110 (CN)
(72) Inventor: XU, Feifan, Shenzhen, Guangdong 518129 (CN); PU, Jiankai, Shenzhen, Guangdong 518129 (CN); CHEN, Chao, Shenzhen, Guangdong 518129 (CN)
(74) Representative: Gill Jennings & Every LLP
(86) International application number: PCT/CN2024/123643
(87) International publication number: WO 2025/082229

(57) **Abstract**

A testing method and a related apparatus are disclosed, and are applied to the field of detection technologies. In this application, a detection apparatus detects a tilting reflection plane to obtain distance data and angle data of a target point position on the reflection plane. The target point position on the reflection plane forms a first angle relative to the detection apparatus in a horizontal direction, and there is an association relationship between a distance of the target point position that is obtained by the detection apparatus and an angle between the detection apparatus and the target point position. Therefore, an actual angle of the target point position relative to the detection apparatus, that is, reference angle data, may be obtained based on the distance data of the target point position that is obtained through detection, an actual distance between the reflection plane and the detection apparatus, and the first angle. In this way, based on the angle data obtained by the detection apparatus through detection and the reference angle data, accuracy of measuring an angle of the target point position by the detection apparatus can be accurately evaluated, so that an angle measurement capability of the detection apparatus can be more accurately tested.

## Description

This application claims priority to Chinese Patent Application No. 202311345908.1, filed with the China National Intellectual Property Administration on October 16, 2023 and entitled "TESTING METHOD AND RELATED APPARATUS", which is incorporated herein by reference in its entirety.

### TECHNICAL FIELD

This application relates to the field of detection technologies, and in particular, to a testing method and a related apparatus.

### BACKGROUND

With development of detection technologies, an increasing quantity of detection apparatuses are widely used in detection, object recognition, positioning, and other scenarios. This provides great convenience for people's life and travel. A detection apparatus may generate a transmit signal and receive a return signal (namely, an echo) for the transmit signal from object space, and may obtain information about a target in the object space based on the return signal. When mounted on an electronic device (for example, a vehicle or a logistics robot), the detection apparatus may serve as an "eye" for sensing an environment, and can detect a surrounding environment of the electronic device. However, with increasing intelligence of the electronic device, people have an increasingly high requirement for a detection capability of the detection apparatus. Standard, efficient, and safe testing on the detection apparatus has become an indispensable part of intelligent development of the electronic device.

A detection capability of the detection apparatus in terms of an angle (that is, an angle measurement capability) has always been a difficulty during testing of the detection apparatus. How to accurately test the angle measurement capability of the detection apparatus is a hot topic being studied by persons skilled in the art.

### SUMMARY

Embodiments of this application provide a testing method and a related apparatus, to improve accuracy of testing an angle measurement capability of a detection apparatus.

**According to a first aspect**, an embodiment of this application provides a testing method. The method includes:
detecting, by a detection apparatus, a reflection plane to obtain first angle measurement data and first ranging data of a target point position on the reflection plane, where the first angle measurement data is angle data of the target point position that is obtained by the detection apparatus through detection, and the first ranging data is distance data of the target point position that is obtained by the detection apparatus through detection;
obtaining a distance between the detection apparatus and the target point position on the reflection plane and a first angle, where the first angle is an included angle between the reflection plane and a connection line between a center of the detection apparatus and the target point position in a horizontal direction; and
determining first reference angle data based on the first ranging data, the first angle, and the distance between the detection apparatus and the target point position on the reflection plane.

The reflection plane may tilt relative to the detection apparatus. The following describes some tilting arrangements from a plurality of aspects. For example, the reflection plane is perpendicular to a horizontal plane in a first direction, and in the horizontal direction, a connection line between the center of the detection apparatus and a horizontal center of the reflection plane forms an acute angle with the reflection plane. For another example, the detection apparatus may include a window, and in the horizontal direction, a plane on which the window of the detection apparatus is located forms a specific angle with (in other words, is not parallel to) a plane, close to the detection apparatus, of the reflection plane. For another example, in the horizontal direction, distances from two ends of the reflection plane to the center of the detection apparatus are different.

In some solutions, the detection apparatus can detect the reflection plane. In this case, a part or all of the reflection plane falls within an FOV of the detection apparatus.

In some solutions, the distance between the detection apparatus and the target point position on the reflection plane may be an actual distance, and the first angle is an actual included angle between the reflection plane and the connection line between the center of the detection apparatus and the target point position in the horizontal direction. In this case, the first angle measurement data and the first ranging data are respectively angle data and distance data that are obtained by the detection apparatus through measurement.

In this embodiment of this application, the detection apparatus detects the tilting reflection plane to obtain the distance data and the angle data of the target point position on the reflection plane. The distance data and the angle data herein are data obtained by the detection apparatus through detection. The target point position on the reflection plane forms the first angle relative to the detection apparatus in the horizontal direction, and there is an association relationship between a distance of the target point position that is obtained by the detection apparatus through detection and an angle between the detection apparatus and the target point position. Therefore, an actual angle of the target point position that is obtained by the detection apparatus through detection, that is, reference angle data, may be obtained based on the distance data of the target point position that is obtained through detection, an actual distance between the reflection plane and the detection apparatus, and the first angle. In this way, based on the angle data obtained by the detection apparatus through detection and the reference angle data, accuracy of measuring an angle of the target point position by the detection apparatus can be accurately evaluated, so that an angle measurement capability of the detection apparatus can be more accurately tested.

The actual angle of the target point position that is obtained by the detection apparatus through detection and measurement may be an angle of the target point position that is obtained by the detection apparatus through detection in a measurement system of the detection apparatus, for example, an angle, relative to a zero azimuth of the detection apparatus, of a point obtained by the detection apparatus through detection.

It should be understood that the horizontal plane, the first direction, and the like are intended to better describe the technical solutions of this application. During specific implementation, the horizontal plane, the first direction, and the like may be set based on an actual case.

Optionally, the center of the detection apparatus may be a light exit center of the detection apparatus, a horizontal center of the detection apparatus, a center (or a horizontal center) of the window of the detection apparatus, a center of mass of the detection apparatus, or the like. In some solutions, the detection apparatus is disposed on a rotatable rotary table. In this case, the center of the detection apparatus may be a center of rotation of the detection apparatus during rotation of the detection apparatus.

Optionally, the reflection plane may be a reflection panel, a wall, or the like. For example, the reflection plane may be a side surface, facing the detection apparatus, of the reflection panel.

**In a possible implementation of the first aspect**, the target point position is at the horizontal center of the reflection plane. The target point position is selected at the horizontal center of the reflection plane. This can avoid a measurement error caused by point cloud jitter that occurs when a selected point is at an edge, to improve accuracy of angle measurement. In addition, the horizontal center is selected, so that a point position can be more quickly selected. This facilitates repeated experiments in a scenario of repeated testing, multi-model testing, or the like, to improve convenience of testing.

Optionally, a height of the target point position in a vertical direction is the same as a height of the center of the detection apparatus in the vertical direction. The vertical direction is a direction perpendicular to the horizontal plane. When the height of the target point position is the same as the height of the center of the detection apparatus, an angle of a detection signal transmitted by the detection apparatus in the vertical direction may be close to or even equal to 0°, to reduce impact of other factors on a current test process. For example, during evaluation of an angle measurement capability in the horizontal direction, in this implementation, impact of an angle measurement error in another direction on the evaluation of the angle measurement capability in the horizontal direction can be reduced, to improve accuracy of the angle measurement capability.

It should be noted that the horizontal direction herein is one of directions. In some solutions, a ground direction may be used as the horizontal direction, or another direction (for example, a direction perpendicular to the ground) may be used as the horizontal direction.

Optionally, when the target point position is at the horizontal center of the reflection plane and the height of the target point position in the vertical direction is the same as the height of the center of the detection apparatus in the vertical direction, the distance between the detection apparatus and the target point position on the reflection plane is a distance between the detection apparatus and the reflection plane.

**In another possible implementation of the first aspect**, the detection apparatus may be a lidar, a radar, or another apparatus. For example, the detection apparatus may transmit a detection signal, and the transmitted detection signal is propagated to object space through the window of the detection apparatus. A target (for example, the reflection plane) in the object space may reflect the detection signal to form a return signal, and the detection apparatus may receive the return signal (namely, an echo), and obtain detection data of the object space based on the return signal. The detection data herein may include one or more of a point cloud, a point, point coordinates, a point distance, a point angle, and the like. The point cloud may include one or more point distances, point angles, or the like.

**In another possible implementation of the first aspect**, the connection line between the center of the detection apparatus and the target point position on the reflection plane forms an acute angle with the reflection plane.

**In another possible implementation of the first aspect**, the connection line between the center of the detection apparatus and the horizontal center of the reflection plane forms an acute angle with the reflection plane.

**In another possible implementation of the first aspect**,
the first reference angle data *aᵢ* satisfies the following formula: ${a}_{i} = arcsin \left(\frac{{d}_{r} sinβ}{{d}_{i}}\right) - β ,$ where
*dᵢ* is the first ranging data, *β* is the first angle, and *dᵣ* is the distance between the target point position and the detection apparatus.

**In another possible implementation of the first aspect**, an angle of the detection apparatus may include a direction and a value. The first reference angle data *aᵢ* may be a value. For example, the first reference angle data *aᵢ* satisfies the following formula: ${a}_{i} = \left|arcsin\left(\frac{{d}_{r} sinβ}{{d}_{i}}\right)-β\right| ,$ where
"||" indicates to obtain an absolute value.

**In another possible implementation of the first aspect**, an angle of the detection apparatus may include a direction and a value.

In some solutions, for an azimuth of the detection apparatus, a center line of the field of view of the detection apparatus is used as the zero azimuth, and a positive direction and a negative direction may be pre-designed for another azimuth, to distinguish between angles. For example, in the horizontal direction, a left side of the center line of the field of view of the detection apparatus indicates a positive angle, and a right side indicates a negative angle.

**In a possible design**, a left side of the center line of the field of view of the detection apparatus indicates a negative angle, and a right side indicates a positive angle. When the reflection plane tilts, if an end, close to the right side of the field of view, of the reflection plane is closer to the detection apparatus than an end, close to the left side of the field of view, of the reflection plane, the first reference angle data *aᵢ* satisfies the following formula: ${a}_{i} = arcsin \left(\frac{{d}_{r} sinβ}{{d}_{i}}\right) - β$

**In another possible design**, a left side of the center line of the field of view of the detection apparatus indicates a negative angle, and a right side indicates a positive angle. When the reflection plane tilts, if an end, close to the left side of the field of view, of the reflection plane is closer to the detection apparatus than an end, close to the right side of the field of view, of the reflection plane, the first reference angle data *aᵢ* satisfies the following formula: ${a}_{i} = β - arcsin \left(\frac{{d}_{r} sinβ}{{d}_{i}}\right)$

**In another possible implementation of the first aspect, during calculation** of the first reference angle data, a deviation between the target point position and the zero azimuth of the detection apparatus further needs to be considered.

**In another possible implementation of the first aspect**, the method further includes: determining a first angle measurement deviation amount of the detection apparatus based on the first reference angle data and the first angle measurement data.

In this implementation, a deviation between the reference angle data and the first angle measurement data may indicate an angle measurement deviation of the detection apparatus, and therefore may be used as an indicator for evaluating an angle measurement capability of the detection apparatus, so that the angle measurement capability of the detection apparatus can be more intuitively and accurately indicated.

**In another possible implementation of the first aspect**, the first ranging data includes N first distances, the first angle measurement data includes N first reported angles, N is an integer, and N≥1. The first reference angle data includes N first reference angles.

Optionally, each of the N first reference angles is related to one of the N first distances, the distance between the detection apparatus and the target point position on the reflection plane, and the first angle.

In this implementation, the detection apparatus may obtain a plurality of groups of detection data (for example, N measured distances and N measured angles) during detection. Correspondingly, reference angles corresponding to the plurality of groups of detection data may be obtained based on the plurality of groups of detection data, so that an angle measurement capability of the detection apparatus can be evaluated based on the plurality of groups of data. This avoids excessive impact on a test result (for example, an accuracy result) due to an error or jitter at a specific time, and further improves test accuracy.

**In another possible implementation of the first aspect**, the method further includes:
determining N angle deviations based on the N first reference angles and N first horizontal reported angles, where each angle deviation is used to describe a difference between a first reference angle and a corresponding first horizontal reported angle; and
determining angle precision of the detection apparatus and/or angle accuracy of the detection apparatus based on the N angle deviations.

**In another possible implementation of the first aspect**, angle precision of the detection apparatus is related to a maximum value of the N angle deviations, or angle precision of the detection apparatus is related to a standard deviation of the N angle deviations.

Optionally, angle accuracy of the detection apparatus is related to an average value of the N angle deviations.

For example, a first angle deviation value may include N angle deviations, which are respectively denoted as, for example, *θ*₁, *θ*₂, ..., and *θ_{N}*. The angle precision may be calculated through max(*θ*₁, *θ*₂, ..., *θ_{N}*), where max() indicates an operation of obtaining a maximum value. For another example, a value of the angle precision may be the standard deviation of the N angle deviations.

The angle accuracy may be obtained through mean(*θ*₁, *θ*₂, ..., *θ_{N}*), where mean() indicates an operation of obtaining an average value.

**In another possible implementation of the first aspect**, the detection apparatus includes a window, and a normal line of the window intersects the horizontal center of the reflection plane, or a normal line of the window intersects the target point position on the reflection plane.

**In another possible implementation of the first aspect**, the first ranging data and the first angle measurement data are detection data obtained when a pointing direction of a first angle position of the field of view of the detection apparatus is aligned with the target point position on the reflection plane, and a pointing direction of a center of the field of view is a direction of a detection signal transmitted from the first angle position.

Angle measurement capabilities of the detection apparatus for different areas of the field of view are usually different. In the foregoing embodiment, the first angle position in the field of view may be aligned with the target point position, so that an angle measurement capability of the detection apparatus for the first angle position can be tested.

**In another possible implementation of the first aspect**, the first angle position is the center line of the field of view. In this case, in the method, an angle measurement capability of the detection apparatus for the center of the field of view may be tested.

**In another possible implementation of the first aspect**, the detection apparatus may be rotated, or the field of view of the detection apparatus may be adjusted, to enable another angle position to be aligned with the target point position, and test an angle measurement capability of the detection apparatus for the another angle position.

**In another possible implementation of the first aspect**, the detection apparatus is disposed on a rotary table, and the method further includes:
rotating, by the rotary table, to enable a pointing direction of a second angle position of the field of view of the detection apparatus to be aligned with the target point position on the reflection plane, where the second angle position is different from the first angle position;
re-detecting, by the detection apparatus, the reflection plane to obtain second angle measurement data and second ranging data of the target point position on the reflection plane, where the second angle measurement data is angle data of the target point position that is obtained by the detection apparatus through detection, and the second ranging data is distance data of the target point position that is obtained by the detection apparatus through detection; and
determining second reference angle data based on the second ranging data, the first angle, and the distance between the detection apparatus and the target point position on the reflection plane.

The rotation herein may be rotation around the center of the detection apparatus, for example, rotation around the light exit center of the detection apparatus, the center of mass of the detection apparatus, or the center of the window of the detection apparatus.

**In another possible implementation of the first aspect**, the rotary table is a two-dimensional rotary table, and the two-dimensional rotary table is configured to rotate the detection apparatus in the horizontal direction and/or the vertical direction.

**In another possible implementation of the first aspect**, the rotary table is a one-dimensional rotary table, and the one-dimensional rotary table is configured to rotate the detection apparatus in the horizontal direction.

Optionally, the rotary table may be a high-precision rotary table. For example, control precision (or accuracy) of the rotary table may be 0.1° or 0.01°.

**In another possible implementation of the first aspect**, the method further includes: determining a second angle measurement deviation amount of the detection apparatus based on the second reference angle data and the second angle measurement data.

**In another possible implementation of the first aspect**, the field of view of the detection apparatus includes M areas, M is an integer, and M≥2.

The first angle position is a center line of a first area among the M areas, and the second angle position is a center line of a second area among the M areas.

For example, the field of view of the detection apparatus may be divided into a nine-grid area of three rows and three columns. During testing, center lines of different areas of the detection apparatus may be aligned with the target point position, to test angle measurement capabilities of the detection apparatus for different areas of the field of view.

In still another possible implementation of the first aspect, a distance between the reflection plane and the detection apparatus is greater than a first distance threshold.

Usually, precision and/or accuracy of ranging performed by the detection apparatus on an excessively close object may have an error. A reflection panel may be placed at a position away from the detection apparatus, to reduce an error in evaluation of an angle measurement capability due to a ranging error, and improve accuracy of the detection apparatus. For example, the first distance threshold is 50 meters or 70 meters.

Further, the distance between the reflection plane and the detection apparatus may be less than a maximum detection distance of the detection apparatus.

**In another possible implementation of the first aspect**, reflectivity of the reflection plane is within a range of 50%±5%. In this implementation, a specific requirement is imposed on the reflectivity of the reflection plane, to enable a lidar to receive an echo with appropriate energy, and improve accuracy of ranging and angle measurement.

In some solutions, the reflection plane may be a diffuse reflection plane.

**In another possible implementation of the first aspect**, the first angle is 10°. Certainly, during specific implementation, the first angle may alternatively have another design, and due to an error, a manufacturing process, or the like, the first angle may not be completely the same as 10°.

**According to a second aspect**, an embodiment of this application provides a testing system. The testing system includes a detection apparatus, a reflection plane, and a computing module.

The reflection plane may tilt relative to the detection apparatus. For example, the reflection plane is perpendicular to a horizontal plane in a first direction, and in a horizontal direction, a connection line between a center of the detection apparatus and a horizontal center of the reflection plane forms an acute angle with the reflection plane. For another example, the detection apparatus may include a window, and in a horizontal direction, a plane on which the window of the detection apparatus is located forms a specific angle with (in other words, is not parallel to) a plane, close to the detection apparatus, of the reflection plane.

The detection apparatus is configured to detect the reflection plane to obtain first angle measurement data and first ranging data of a target point position on the reflection plane. The computing module is configured to process data to obtain reference angle data, where the data herein includes detection data from the detection apparatus, position data between the reflection plane and the detection apparatus, and the like.

Optionally, the reflection plane may be implemented by using a reflection panel, a wall, or another object. For example, the reflection plane may be a side surface, facing the detection apparatus, of the reflection panel.

**In a possible implementation of the second aspect**, the computing module is configured to:
obtain a distance between the detection apparatus and the target point position on the reflection plane and a first angle, where the first angle is an included angle between the reflection plane and a connection line between the center of the detection apparatus and the target point position in the horizontal direction; and
determine first reference angle data based on the first ranging data, the first angle, and the distance between the detection apparatus and the target point position on the reflection plane.

**In another possible implementation of the second aspect**, the testing system further includes a rotary table, the detection apparatus is disposed on the rotary table, and the rotary table is configured to rotate the detection apparatus to adjust a direction of a field of view of the detection apparatus.

Optionally, the rotary table may be a high-precision rotary table. For example, control precision (or accuracy) of the rotary table may be 0.1° or 0.01°.

**In another possible implementation of the second aspect**, the testing system is further configured to implement the testing method described in any one of the first aspect or the possible implementations of the first aspect.

**In another possible implementation of the second aspect**, the rotary table is a two-dimensional rotary table, and the two-dimensional rotary table is configured to rotate the detection apparatus in the horizontal direction and/or a vertical direction.

**In another possible implementation of the second aspect**, the rotary table is a one-dimensional rotary table, and the one-dimensional rotary table is configured to rotate the detection apparatus in the horizontal direction.

**In another possible implementation of the second aspect**, a distance between the reflection plane and the detection apparatus is greater than a first distance threshold. For example, the first distance threshold is 50 meters or 70 meters.

Further, the distance between the reflection plane and the detection apparatus may be less than a maximum detection distance of the detection apparatus.

**In another possible implementation of the second aspect**, reflectivity of the reflection plane is within a range of 50%±5%.

**In another possible implementation of the second aspect**, the first angle is 10°.

**According to a third aspect**, an embodiment of this application further provides a testing method. The method includes:
obtaining first angle measurement data and first ranging data from a detection apparatus, where the first angle measurement data is angle data of a target point position that is obtained by the detection apparatus through detection, and the first ranging data is distance data of the target point position that is obtained by the detection apparatus through detection;
obtaining a distance between the detection apparatus and the target point position on a reflection plane and a first angle, where the first angle is an included angle between the reflection plane and a connection line between a center of the detection apparatus and the target point position in a horizontal direction; and
determining first reference angle data based on the first ranging data, the first angle, and the distance between the detection apparatus and the target point position on the reflection plane.

The reflection plane may tilt relative to the detection apparatus. For example, the reflection plane is perpendicular to a horizontal plane in a first direction, and in the horizontal direction, a connection line between the center of the detection apparatus and a horizontal center of the reflection plane forms an acute angle with the reflection plane. For another example, the detection apparatus may include a window, and in the horizontal direction, a plane on which the window of the detection apparatus is located forms a specific angle with (in other words, is not parallel to) a plane, close to the detection apparatus, of the reflection plane.

Optionally, the detection apparatus may be a lidar, a radar, or another apparatus.

Optionally, the reflection plane may be implemented by using a reflection panel, a wall, or another object. For example, the reflection plane may be a side surface, facing the detection apparatus, of the reflection panel.

**In a possible implementation of the third aspect**, the target point position is at the horizontal center of the reflection plane.

**In another possible implementation of the third aspect**, a height of the target point position in a vertical direction is the same as a height of the center of the detection apparatus in the vertical direction. The vertical direction is a direction perpendicular to the horizontal plane.

**In another possible implementation of the third aspect**, the connection line between the center of the detection apparatus and the target point position on the reflection plane forms an acute angle with the reflection plane.

**In another possible implementation of the third aspect**, the connection line between the center of the detection apparatus and the horizontal center of the reflection plane forms an acute angle with the reflection plane.

**In another possible implementation of the third aspect**, the first reference angle data *aᵢ* satisfies the following formula: ${a}_{i} = arcsin \left(\frac{{d}_{r} sinβ}{{d}_{i}}\right) - β ,$ where
*dᵢ* is the first ranging data, *β* is the first angle, and *dᵣ* is the distance between the target point position and the detection apparatus.

**In another possible implementation of the third aspect**, the first reference angle data *aᵢ* satisfies the following formula: ${a}_{i} = β - arcsin \left(\frac{{d}_{r} sinβ}{{d}_{i}}\right) ,$ where
*dᵢ* is the first ranging data, *β* is the first angle, and *dᵣ* is the distance between the target point position and the detection apparatus.

**In another possible implementation of the third aspect**, the method further includes: determining a first angle measurement deviation amount of the detection apparatus based on the first reference angle data and the first angle measurement data.

**In another possible implementation of the third aspect**, the first ranging data includes N first distances, the first angle measurement data includes N first reported angles, N is an integer, and N≥1. The first reference angle data includes N first reference angles.

Further, each of the N first reference angles is related to one of the N first distances, the distance between the detection apparatus and the target point position on the reflection plane, and the first angle.

**In another possible implementation of the third aspect**, the method further includes: determining N angle deviations based on the N first reference angles and N first horizontal reported angles, where each angle deviation is used to describe a difference between a first reference angle and a corresponding first horizontal reported angle; and determining angle precision of the detection apparatus and/or angle accuracy of the detection apparatus based on the N angle deviations.

**In another possible implementation of the third aspect**, the angle precision of the detection apparatus is related to a maximum value of the N angle deviations or a standard deviation of the N angles deviations, and the angle accuracy of the detection apparatus is related to an average value of the N angle deviations.

**In another possible implementation of the third aspect**, the detection apparatus includes a window, and a normal line of the window intersects the horizontal center of the reflection plane, or a normal line of the window intersects the target point position on the reflection plane.

**In another possible implementation of the third aspect**, the first ranging data and the first angle measurement data are detection data obtained when a pointing direction of a first angle position of a field of view of the detection apparatus is aligned with the target point position on the reflection plane, and a pointing direction of a center of the field of view is a direction of a detection signal transmitted from the first angle position.

**In another possible implementation of the third aspect**, the first angle position is a center line of the field of view. In this case, in the method, an angle measurement capability of the detection apparatus for the center of the field of view may be tested.

**In another possible implementation of the third aspect**, the method further includes: obtaining second angle measurement data and second ranging data, where the second angle measurement data is angle data of the target point position that is obtained by the detection apparatus through detection, and the second ranging data is distance data of the target point position that is obtained by the detection apparatus through detection; and determining second reference angle data based on the second ranging data, the first angle, and the distance between the detection apparatus and the target point position on the reflection plane.

**In another possible implementation of the third aspect**, the method further includes: determining a second angle measurement deviation amount of the detection apparatus based on the second reference angle data and the second angle measurement data.

**According to a fourth aspect**, an embodiment of this application provides a computing module. The computing module includes an obtaining unit and a processing unit. The obtaining unit is configured to obtain data. The processing unit is configured to process the data. The computing module is configured to implement the method described in any one of the third aspect or the possible implementations of the third aspect.

According to a fifth aspect, an embodiment of this application provides a computing module. The computing module includes a processor. When the processor invokes a computer program or instruction in a memory, the computing module implements the method according to any one of the third aspect or the possible implementations of the third aspect.

According to a sixth aspect, an embodiment of this application provides a computing module, including a logic circuit and an interface. The logic circuit is coupled to the interface.

The interface is configured to input to-be-processed data. The logic circuit processes the to-be-processed data according to the method described in any one of the third aspect or the possible implementations of the third aspect, to obtain processed data. The interface is further configured to output the processed data.

According to a seventh aspect, an embodiment of this application provides a computer-readable storage medium. The computer-readable storage medium is configured to store instructions or a computer program. When the instructions or the computer program is executed, the method described in any one of the third aspect or the possible implementations of the third aspect is implemented.

According to an eighth aspect, an embodiment of this application provides a computer program product. When instructions or a computer program is executed, the method described in any one of the third aspect or the possible implementations of the third aspect is implemented.

According to a ninth aspect, an embodiment of this application provides an electronic device. The electronic device includes the computing module according to any one of the fourth aspect to the sixth aspect.

### BRIEF DESCRIPTION OF DRAWINGS

FIG. 1 is a diagram of an architecture of a testing system according to an embodiment of this application;
FIG. 2 is a top view of a testing system according to an embodiment of this application;
FIG. 3 is a schematic flowchart of a testing method according to an embodiment of this application;
FIG. 4 is a diagram of a geometric relationship between a detection apparatus and a reflection plane according to an embodiment of this application;
FIG. 5 is a diagram of a coordinate system according to an embodiment of this application;
FIG. 6 is a diagram of a point cloud according to an embodiment of this application;
FIG. 7 is a diagram of another geometric relationship between a detection apparatus and a reflection plane according to an embodiment of this application;
FIG. 8 is a top view of another testing system according to an embodiment of this application;
FIG. 9 is a diagram of a structure of a computing module according to an embodiment of this application; and
FIG. 10 is a diagram of a structure of another computing module according to an embodiment of this application.

### DESCRIPTION OF EMBODIMENTS

The following describes embodiments of this application with reference to the accompanying drawings.

1. Detection apparatus: The detection apparatus can transmit a signal to detect a target object. The detection apparatus includes but is not limited to a radar (Radar), a lidar (Lidar), or the like. The radar may be a millimeter-wave radar, a centimeter-wave radar, or the like. In some scenarios, an apparatus (a fusion detection apparatus) that integrates both a radar (or a lidar) and a camera may also detect a target object, and the fusion detection apparatus also falls within the scope of the detection apparatus in this application.

The following describes a testing system in this application. It should be noted that a system architecture and a service scenario described in this application are intended to describe the technical solutions of this application more clearly, and do not constitute a limitation on the technical solutions provided in this application. With evolution of the system architecture and emergence of a new service scenario, the technical solutions provided in this application are also applicable to similar technical problems.

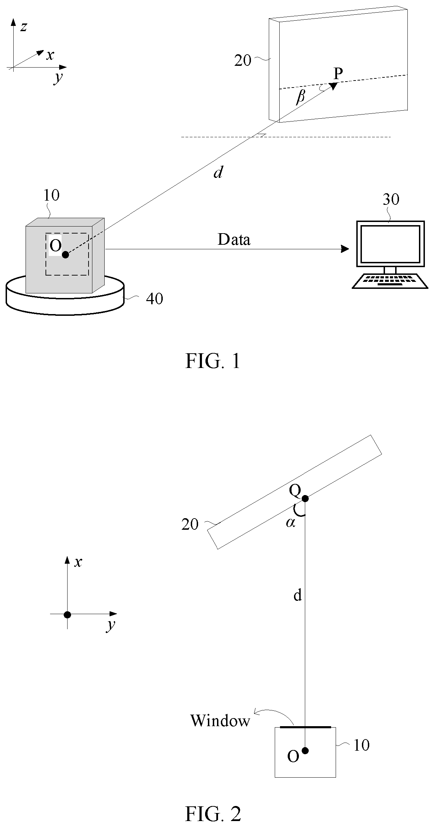

FIG. 1 is a diagram of an architecture of a testing system according to an embodiment of this application. The testing system includes a detection apparatus 10 and a reflection panel 20.

The detection apparatus is configured to detect object space. The detection apparatus may be a lidar, a radar, or another apparatus. For example, the detection apparatus may transmit a detection signal, and the transmitted detection signal is propagated to the object space through a window of the detection apparatus. A target (for example, the reflection panel) in the object space may reflect the detection signal to form a return signal, and the detection apparatus may receive the return signal (namely, an echo), and obtain detection data of the object space based on the return signal. The detection data herein may include one or more of a point cloud, a point, point coordinates, a point distance, a point angle, and the like. The point cloud may include one or more point distances, point angles, or the like. In some solutions, during detection on a target object, a line-of-sight (line of sight, LOS) area, namely, a field of view (field of view, FOV), in which transmission of a signal (for example, a radio wave or laser light) is uninterrupted, is needed between the detection apparatus and the target object. The detection signal transmitted by the detection apparatus may be propagated (including a case of scanning) within the FOV, to detect an object within the FOV.

The reflection panel 20 may serve as a reflection plane, and the reflection panel 20 tilts relative to the detection apparatus. For example, as shown in FIG. 1, the reflection panel 20 is vertically disposed on a horizontal plane, and a side surface (for example, a surface perpendicular to the horizontal plane) of the reflection panel 20 tilts relative to the detection apparatus. To describe a position of the reflection plane more specifically, with reference to FIG. 1, the reflection plane (a surface of the reflection panel 20, for example, a surface facing the detection apparatus 10) may be perpendicular to the horizontal plane in a first direction. The first direction herein is, for example, a direction along a Z-axis. In other words, a height direction of the reflection panel 20 is perpendicular to the horizontal plane. Further, in a horizontal direction, a connection line between a center of the detection apparatus and a horizontal center of the reflection plane forms a specific angle, for example, an acute angle, with the reflection plane. Refer to FIG. 2. A point O is the center of the detection apparatus, and a point Q is the horizontal center of the reflection plane. It can be learned that a line PQ forms a specific angle with a plane, facing the detection apparatus, of the reflection plane, where the angle is denoted as an angle *α*, and the angle *α* is an acute angle. That is, the line PQ is not perpendicular to the plane, facing the detection apparatus, of the reflection plane.

For another example, the detection apparatus may include a window (as shown in FIG. 2), and in the horizontal direction, a plane on which the window of the detection apparatus is located forms a specific angle with (in other words, is not parallel to) the reflection plane.

For example, in the horizontal direction, distances from two ends of the reflection plane to the center of the detection apparatus are different. As shown in FIG. 2, a left end of the reflection plane is closer to the center of the detection apparatus, and a right end is farther away from the center of the detection apparatus.

In this embodiment of this application, the detection apparatus may detect the reflection plane to obtain detection data of the reflection plane. The detection data herein may include ranging data and angle measurement data of one or more points (referred to as a target point position for ease of description) on the reflection plane. The target point position on the reflection plane forms a first angle relative to the detection apparatus in the horizontal direction, and there is an association relationship between a distance of the target point position that is obtained by the detection apparatus and an angle between the detection apparatus and the target point position. Therefore, an actual angle of the target point position relative to the detection apparatus, that is, reference angle data, may be obtained based on distance data of the target point position that is obtained through detection, an actual distance between the reflection plane and the detection apparatus, and the first angle. In this way, based on angle data obtained by the detection apparatus through detection and the reference angle data, accuracy of measuring an angle of the target point position by the detection apparatus can be accurately evaluated, so that an angle measurement capability of the detection apparatus can be more accurately tested.

It should be noted that the reflection plane shown in FIG. 1 and other parts in this specification may alternatively be replaced with a surface provided by a wall, another object, or the like. In some embodiments of this specification, a reflection panel is used as an example for description. Embodiments of this application are also applicable to a case in which a reflection plane is implemented by using another object.

In some possible implementations, the testing system may further include a computing module 30. The computing module 30 has a computing capability (or referred to as a data processing capability), and can process data. For example, the computing module 30 is configured to process captured data to obtain reference angle data, where the captured data herein includes detection data from the detection apparatus, position data between the reflection plane and the detection apparatus, and the like.

The following describes a possible form of the computing module 30. The computing module 30 may be a server, a personal computer (personal computer, PC), an intelligent terminal, or the like. When the computing module 30 is implemented by using a server, there may be one or more servers (for example, a server cluster) for implementing functions of the computing module 30. In some possible solutions, the computing module 30 may be implemented by using a software functional unit. For example, the computing module 30 may be implemented by using a virtual machine, a container, or a cloud. The virtual machine is a computer system that is simulated by using software and that has a complete hardware system function and runs in an isolated environment. The container is an isolated environment obtained by packaging an application and an application dependency package. The cloud is a software platform on which an application virtualization technology is used, and can enable one or more pieces of software and applications to be developed and run in an independent virtualized environment.

In some possible implementations, the testing system may further include a rotary table 40. The detection apparatus 10 is disposed on the rotary table 40, and the rotary table 40 is configured to rotate the detection apparatus 10 to adjust a direction of a field of view of the detection apparatus 10.

In some possible implementations, the testing system may further include a ground truth capture apparatus. The ground truth capture apparatus is configured to obtain a distance between the detection apparatus and the reflection plane (or any point on the reflection plane), an angle between the reflection plane and the detection apparatus, or the like.

For example, the ground truth capture apparatus may be a total station. The total station may measure one or more of the following: four-corner coordinates of the reflection panel 20, coordinates of a center point position, coordinates of a target point position, or the like. For example, a distance between the reflection panel 20 and the detection apparatus 10 and a tilt angle of the reflection panel 20 relative to the detection apparatus 10 may be calculated based on data obtained by the total station through measurement. For example, an included angle *β* between the reflection panel and a connection line between the target point position and the detection apparatus 10 may be calculated based on measurement data of the total station. For another example, a distance between the target point position and the center of the detection apparatus 10 may be calculated based on measurement data of the total station.

In some other possible implementations, the first angle may alternatively be obtained by the detection apparatus through calculation. For example, the detection apparatus obtains a tilt angle, for example, the first angle, of the reflection plane relative to the detection apparatus in a calibration stage. For another example, the detection apparatus may obtain a tilt angle, for example, the first angle, of the reflection plane through calculation by using a point cloud of the reflection plane.

Optionally, the rotary table 40 may be a high-precision rotary table. For example, control precision (or accuracy) of the rotary table 40 may be 0.1° or 0.01°.

Optionally, the rotary table 40 is a one-dimensional rotary table, and the one-dimensional rotary table is configured to rotate the detection apparatus 10 in a specific direction (for example, the horizontal direction). Alternatively, optionally, the rotary table 40 is a two-dimensional rotary table, and the two-dimensional rotary table can rotate the detection apparatus 10 in one or two directions (for example, the horizontal direction and/or a vertical direction).

In some possible implementations, the distance between the reflection plane and the detection apparatus is greater than a first distance threshold. For example, the first distance threshold is 50 meters or 70 meters. Further, the distance between the reflection plane and the detection apparatus may be less than a maximum detection distance of the detection apparatus.

In some possible implementations, reflectivity of the reflection plane is within a range of 50%±5%. In some solutions, the reflection plane may be a diffuse reflection plane, for example, a diffuse reflection panel.

In some possible implementations, the first angle is 10°.

In some possible implementations, when the reflection plane is a reflection panel, the reflection panel is a 2 m×1 m reflection panel, and a thickness of the reflection panel is not limited herein.

Optionally, surface flatness of the reflection plane is high.

It should be understood that the horizontal plane, the first direction, and the like in the foregoing descriptions are examples for ease of description of the technical solutions of this application. During specific implementation, the horizontal plane, the first direction, and the like may be set based on an actual case. As shown in FIG. 1, a Cartesian coordinate system (an XYZ coordinate system) is used as an example, where an XY plane may be used as the horizontal plane, and the reflection plane is vertically arranged on the XY plane.

Optionally, the center of the detection apparatus may be a light exit center of the detection apparatus, a horizontal center of the detection apparatus, a center of the window of the detection apparatus, a center of mass of the detection apparatus, or the like. In some solutions, the detection apparatus is disposed on a rotatable rotary table. In this case, the center of the detection apparatus may be a center of rotation of the detection apparatus during rotation of the detection apparatus.

Optionally, the horizontal center of the reflection plane may be a center of a plane, facing the detection apparatus, of the reflection plane in the horizontal direction.

In addition, names of apparatuses and modules in embodiments of this application are merely examples. During specific implementation, the names of the apparatuses, the modules, and the like may be randomly replaced.

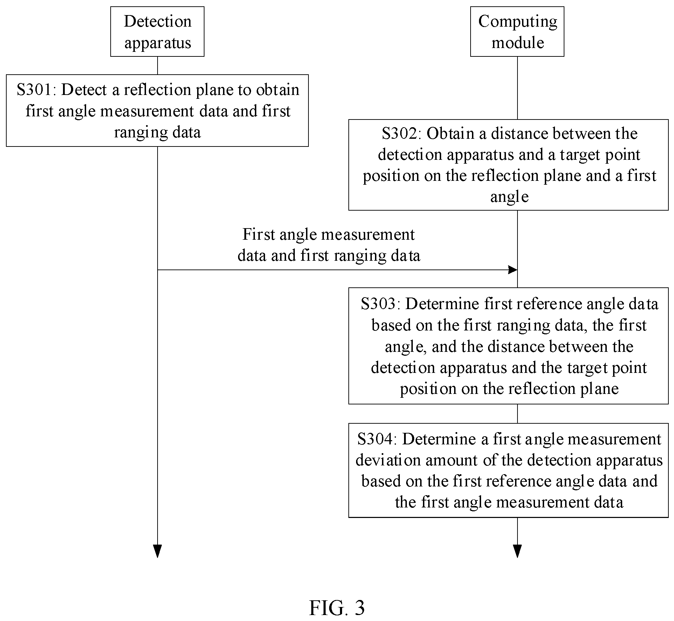

The following describes a method provided in embodiments of this application. FIG. 3 is a schematic flowchart of a testing method according to an embodiment of this application. Optionally, the method may be implemented based on the system shown in FIG. 1 or FIG. 2.

The testing method shown in FIG. 3 may include one or more of step S301 to step S304. It should be understood that, for ease of description, a sequence of S301 to S304 is used for description herein, but this is not intended to indicate that the method is necessarily performed in the foregoing sequence. An execution sequence, execution time, a quantity of times of execution, or the like of one or more of the foregoing steps is not limited in embodiments of this application. S301 to step S304 are specifically as follows.

Step S301: A detection apparatus detects a reflection plane to obtain first angle measurement data and first ranging data.

The first angle measurement data and the first ranging data may be detection data for a target point position on the reflection plane. The first angle measurement data is angle data of the target point position that is obtained by the detection apparatus through detection. The first ranging data is distance data of the target point position that is obtained by the detection apparatus through detection. Usually, data obtained by the detection apparatus through detection is a point cloud including a plurality of points. The point cloud is a set of points, and these points usually have geometric position information (for example, the points may have one or more of a distance, an angle, three-dimensional coordinate information, and the like). The point cloud mainly represents an outer surface shape of an object. Optionally, a point in the point cloud may further have one or more of the following information: a color, a grayscale, a depth, reflectivity, or the like.

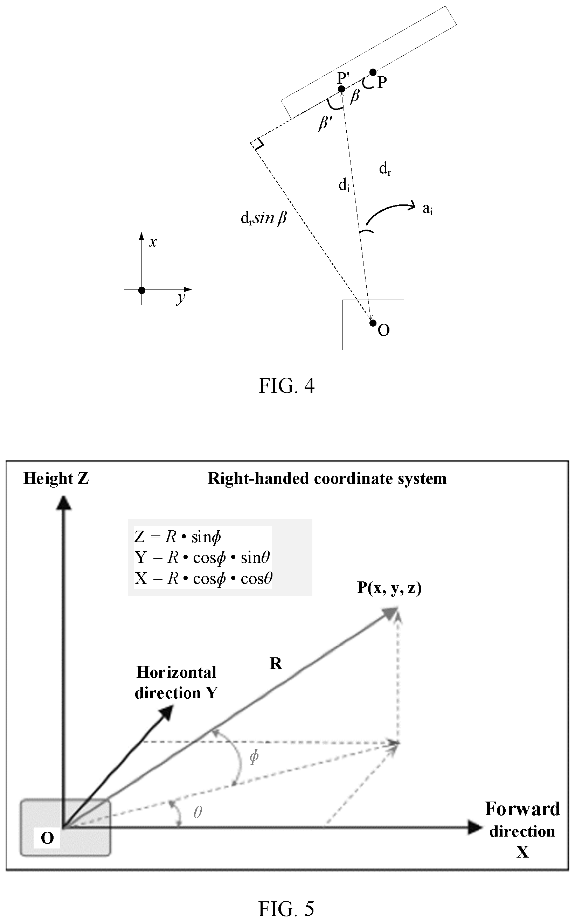

The reflection plane tilts relative to the detection apparatus. For a position design of the reflection plane, refer to the foregoing related descriptions. The target point position is a position of one or more points on the reflection plane. In the point cloud, one or more points corresponding to the target point position are used as a detection result of the detection apparatus for the target point position. Refer to FIG. 4. A specific point position on the reflection plane may be selected during testing. For example, the target point position may be a point P shown in FIG. 4. An included angle between the reflection plane and a connection line between the target point position and a center of the detection apparatus is referred to as a first angle, denoted as *β*.

Optionally, the target point position is at a horizontal center of the reflection plane. Optionally, a height of the target point position in a vertical direction is the same as a height of the center of the detection apparatus in the vertical direction.

In some solutions, a coordinate system (a right-handed coordinate system is used as an example) is established by using the center of the detection apparatus as an origin (namely, a point O), as shown in FIG. 5. A forward direction of the detection apparatus is an X-axis, a horizontal direction of the detection apparatus is a Y-axis, and a height direction of the detection apparatus is a Z-axis. For example, when a distance between the point P and the detection apparatus is R and coordinates of the center are (x, y, z), z = R ∗ sin*ϕ*, *y* = R ∗ cos*ϕ* ∗ sin*θ*, and x = R ∗ cos*ϕ* ∗ *cosθ*, where *ϕ* herein is a pitch angle, and *θ* is an azimuth angle of the point P. In this case, when the forward direction of the detection apparatus intersects the horizontal center of the reflection plane, an X-axis coordinate of the target point position may be 0, and a Z-axis coordinate (namely, the height) of the target point position is 0.

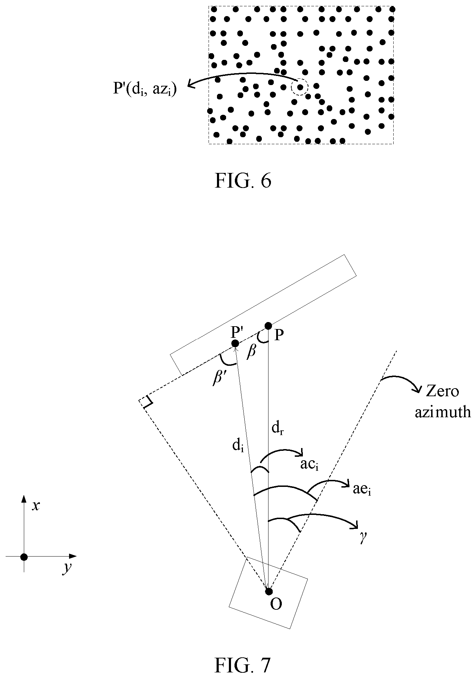

FIG. 6 is a diagram of a point cloud according to an embodiment of this application. A point cloud of the detection apparatus includes a point cloud corresponding to the reflection plane (a contour of the reflection plane is indicated by a dashed-line box). A point cloud obtained by the detection apparatus through detection includes a point corresponding to the target point position. For ease of description, the point is denoted as a point *P'*. The point cloud may include a distance and an angle of the point *P'* that are respectively used as ranging data and angle measurement data of the target point position. As shown in FIG. 6, the distance of *P'* is *dᵢ*, and is the distance data of the target point position that is obtained by the detection apparatus through detection; and the angle of the point *P'* is *azᵢ*, and is the angle data of the target point position that is obtained by the detection apparatus through detection. To be specific, an azimuth angle *θ* is used as an example, and *azᵢ* is a measured value of an azimuth angle *θ* of the point *P'*. For example, *dᵢ* may be 49.5 m, and an angle reported by the detection apparatus is 0.01°.

Optionally, *azᵢ* may be an angle (or referred to as a horizontal reported angle), in the horizontal direction, that is obtained through detection on the target point position. Certainly, this application is also applicable to a case in which the horizontal plane or the horizontal direction in this application is replaced with a plane in another direction or an angle in another direction. It can be understood that a point that is in the point cloud of the detection apparatus and that corresponds to the target point position may be different from the point P. Still refer to FIG. 4. *P'* is represented in the XYZ coordinate system. It can be learned that an actual position of *P'* may be different from an actual position of the point P.

In some possible cases, for an azimuth of the detection apparatus, a center line of a field of view of the detection apparatus is used as a zero azimuth, and a positive direction and a negative direction may be pre-designed for another azimuth, to distinguish between angles. For example, in the horizontal direction, a left side of the center line of the field of view of the detection apparatus indicates a positive angle, and a right side indicates a negative angle. For example, for a point on the left side of the detection apparatus, a measurement result of the detection apparatus for an azimuth angle of the point is represented as a negative number. Similarly, for a point on the right side of the detection apparatus, a measurement result of the detection apparatus for an azimuth angle of the point is represented as a positive number. Certainly, this application is also applicable to a case in which another angle position of the field of view is used as a zero azimuth, and a positive direction, a negative direction, and the like of an angle may alternatively have other designs.

In a possible implementation, the detection apparatus may perform detection for one or more times. To be specific, the first angle measurement data may include one or more angles (referred to as first reported angles for ease of differentiation), and correspondingly, the first ranging data may include a plurality of distances (referred to as first distances for ease of differentiation). For ease of description, in this application, N first reported angles and N first distances are used as an example for description, where N is an integer, and N≥1, for example, N=300. For example, the first reported angle may be denoted as *azᵢ*, where i is used as a sequence number to distinguish between different angles. For example, the N first reported angles may be respectively denoted as *az*₁, *az*₂, ..., and *az_{N}*. Correspondingly, the first distance may also be denoted as *dᵢ*. For example, the N first distances may be respectively denoted as *d*₁, *d*₂, ..., and *d_{N}*.

Further, the first angle measurement data and the first ranging data that are obtained by the detection apparatus may be provided for a computing module, so that the computing module can evaluate an angle measurement capability of the detection apparatus based on the first angle measurement data and the first ranging data.

In some solutions, the detection apparatus may provide the point cloud obtained through detection for the computing module. A manner of providing the point cloud herein may be communication (for example, the detection apparatus and the computing module are communicatively connected to each other) or copying (for example, copying through a storage medium). A transmission mode of the detection data is not specifically limited in this application.

Further, the computing module recognizes the point cloud of the reflection plane from the point cloud, and selects the first angle measurement data and the first ranging data that correspond to the target point position, to evaluate the angle measurement capability of the detection apparatus. For example, the detection apparatus obtains a 300-frame point cloud through detection, and the 300-frame point cloud is provided for the computing module. For each frame of point cloud, the computing module recognizes a point cloud corresponding to the reflection plane from the frame of point cloud, selects a point at the target point position on the reflection plane, and records a distance and an angle (or a horizontal reported angle) of the point. In this case, if filtering of a selected point or the like is not considered, the computing module may obtain 300 distances and 300 angles for the target point position, which are respectively denoted as, for example, *d*₁, *d*₂, ..., and *d*₃₀₀, and *az*₁, *az*₂, ..., and *az*₃₀₀.

Step S302: The computing module obtains a distance between the detection apparatus and the target point position on the reflection plane and the first angle.

Optionally, the distance between the detection apparatus and the target point position on the reflection plane may be a distance between the center of the detection apparatus and the target point position on the reflection plane. Refer to FIG. 4. The point P is the target point position on the reflection plane, and the distance between the detection apparatus and the target point position on the reflection plane may be denoted as *dᵣ*.

Optionally, the target point position is the horizontal center of the reflection plane. In this case, the distance between the detection apparatus and the target point position on the reflection plane may be replaced with a distance between the center of the detection apparatus and the horizontal center of the reflection plane. In some solutions, the distance between the center of the detection apparatus and the target point position on the reflection plane may be calculated by using coordinates of another point on the reflection plane.

The first angle is the included angle between the reflection plane and the connection line between the center of the detection apparatus and the target point position, for example, the included angle between the reflection plane and the connection line between the center of the detection apparatus and the target point position. Optionally, when the reflection plane is a reflection panel, the reflection plane may be specifically a plane, facing the detection apparatus, of the reflection panel. Refer to FIG. 4. The first angle is the angle *β*.

In a possible implementation, the distance between the detection apparatus and the target point position on the reflection plane may be captured by a ground truth capture apparatus. For example, the ground truth capture apparatus is a total station, and one or more of the following may be measured by the total station: four-corner coordinates of the reflection plane, coordinates of the target point position, and the like. The distance between the reflection plane and the target point position on the detection apparatus may be calculated based on data obtained by the total station through measurement.

In a possible implementation, the first angle may be captured by the ground truth capture apparatus. For example, a tilt angle of the reflection plane relative to the detection apparatus is obtained through calculation by using the four-corner coordinates of the reflection plane (or coordinates of a plurality of points on the reflection plane) that are captured by the total station. For example, the included angle *β* between the reflection panel and the connection line between the target point position on the reflection plane and the detection apparatus 10 is obtained through calculation.

Alternatively, the first angle may be obtained by the detection apparatus. For example, the detection apparatus obtains a tilt angle, namely, the first angle, of the reflection plane relative to the detection apparatus in a calibration stage. For another example, the detection apparatus may obtain a tilt angle, namely, the first angle, of the reflection plane through calculation by using the point cloud of the reflection plane.

Step S303: The computing module determines first reference angle data based on the first ranging data, the first angle, and the distance between the detection apparatus and the target point position on the reflection plane.

It can be understood that, because the reflection plane is arranged in a tilting manner, when the target point has angle jitter on the reflection plane, the angle jitter may alternatively be indicated by a distance of the target point. Therefore, a reference angle corresponding to the target point position may be obtained through inverse solution by using the first angle, the distance between the detection apparatus and the target point position on the reflection plane, and a distance obtained by the detection apparatus through detection.

As shown in FIG. 4, if the center line of the field of view of the detection apparatus points to the target point position, namely, the point P, for the detection apparatus, an angle of the point P is 0°. The detection apparatus obtains, through detection based on detection on the target point position, a point corresponding to the target point position, namely, the point P, where the point is a measured target point position, namely, the point P'. There may be a deviation between the point P' and an actual target point position. The distance of the point P' is *dᵢ*. In this case, first reference angle data *aᵢ* of the point P' may be obtained through solution. An azimuth angle is used as an example. In other words, *aᵢ* is a reference value of the azimuth angle *θ* of the point *P'*. The reference value *aᵢ* is obtained through calculation based on an actual distance between the detection apparatus and the target point position on the reflection plane, the first angle at which the reflection panel tilts relative to the detection apparatus, and the distance obtained through measurement.

In a possible implementation, the first reference angle data may be related to the first ranging data, the first angle, and the distance between the detection apparatus and the target point position on the reflection plane. Further, the first reference angle data is related to a tilt direction of the reflection plane relative to the detection apparatus. Further, the first reference angle data is related to an angle of the target point position, for example, an angle of the target point position relative to the zero azimuth.

The following lists several possible cases of the first reference angle data *aᵢ*.

**Case 1**: The first reference angle data *aᵢ* may be represented by using the following formula: ${a}_{i} = arcsin \left(\frac{{d}_{r} sinβ}{{d}_{i}}\right) - β$

*dᵢ* is the first ranging data, *β* is the first angle, *dᵣ* is the distance between the target point position and the detection apparatus, and i represents a reference number. For example, in *dᵢ*, i may be 1, ..., or N (or 0, ..., or N-1, where this is merely an example). In this case, the first reference angle data correspondingly includes N first reference angles: *a*₁, *a*₂, ..., and *a_{N}*.

Further, in this case, a sign of the first reference angle data is related to the tilt direction of the reflection plane relative to the detection apparatus. For example, in FIG. 4, a left end of the reflection plane is closer to the detection apparatus, and the left end of the detection apparatus is a positive direction of an angle. In this case, in the first reference angle data obtained through solution, a left side of the zero azimuth is a positive direction, and a right side is a negative direction.

**Case 2**: The reference angle data *aᵢ* may be unsigned. In other words, the first reference angle data *aᵢ* may be a value. For example, the first reference angle data *aᵢ* satisfies the following formula: ${a}_{i} = \left|arcsin\left(\frac{{d}_{r} sinβ}{{d}_{i}}\right)-β\right| ,$ where
"||" indicates to obtain an absolute value.

**Case 3**: A left side of the center line of the field of view of the detection apparatus indicates a negative angle, and a right side is a positive angle. When the reflection plane tilts, if an end, close to the left side of the field of view, of the reflection plane is closer to the detection apparatus than an end, close to the right side of the field of view, of the reflection plane, the first reference angle data *aᵢ* satisfies the following formula: ${a}_{i} = β - arcsin \left(\frac{{d}_{r} sinβ}{{d}_{i}}\right)$

**Case 4**: A left side of the center line of the field of view of the detection apparatus indicates a negative angle, and a right side indicates a positive angle. When the reflection plane tilts, if an end, close to the left side of the field of view, of the reflection plane is closer to the detection apparatus than an end, close to the right side of the field of view, of the reflection plane, the detection apparatus may first obtain a deviation value *aeᵢ* between the target point position and the zero azimuth, and then use an opposite number as the first reference angle data. FIG. 4 is still used as an example. The first deviation value *aeᵢ* between the target point position and the zero azimuth may be determined by using the following formula: ${ae}_{i} = arcsin \left(\frac{{d}_{r} sinβ}{{d}_{i}}\right) - β$

Further, the first reference angle data *aᵢ* = -*aeᵢ*.

The foregoing descriptions are provided by using an example in which the zero azimuth intersects the target point position (or intersects the target point position in the horizontal direction). In some possible cases, the zero azimuth of the detection apparatus may not intersect the target point position (or may not intersect the target point position in the horizontal direction). In this case, an azimuth of the target point position may be further considered during calculation of the first reference angle data *aᵢ*.

FIG. 7 is a diagram of another geometric relationship between a detection apparatus and a reflection plane according to an embodiment of this application. In this case, an azimuth of the target point position, namely, the point P (to be specific, an angle of the point P relative to the zero azimuth) is a second angle, and the second angle is denoted as *γ*. In this case, reference angles obtained through solution by using the first ranging data are the second angle and a second deviation angle, and the second deviation angle is used to describe a deviation between an angle of the point P' and an angle of the point P.

For example, the calculation manner in the foregoing case 4 is used as an example. A deviation value *acᵢ*, from an angle of the target point position, that is represented by the second deviation angle *acᵢ* in this case satisfies the following formula: ${ac}_{i} = arcsin \left(\frac{{d}_{r} sinβ}{{d}_{i}}\right) - β$

The first reference angle data *aᵢ* may be obtained through calculation by using the second angle and the second deviation angle. For example, *aᵢ* = *γ* - *aeᵢ*. In other words, the first reference angle data *aᵢ* satisfies the following formula: ${a}_{i} = γ - arcsin \left(\frac{{d}_{r} sinβ}{{d}_{i}}\right) + β$

It should be noted that, in the calculation manner in one or more of the foregoing case 1 to case 3, the angle of the target point position may alternatively be used to calculate the first reference angle data. Details are not described herein.

It can be easily figured out that, in the embodiment of FIG. 3, angle measurement data and reference angle data of the detection apparatus for the target point position may be obtained, and based on angle data (namely, a measured value *azᵢ*) obtained by the detection apparatus through detection and the reference angle data (namely, a reference value *aᵢ*), accuracy of measuring an angle of the target point position by the detection apparatus can be accurately evaluated, so that an angle measurement capability of the detection apparatus can be more accurately tested. FIG. 4 is used as an example. For example, a left side of a field of view is a positive direction of an angle. For example, the first angle measurement data is -0.01°, and the first reference angle data obtained through solution by using the ranging data is -0.05°. This indicates that there is a deviation in angle measurement. Correspondingly, the first angle measurement data being -0.01° and the first reference angle data obtained through solution by using the ranging data being -0.01° indicate that angle measurement data is correct and an angle measurement capability is strong.

In some solutions, the first angle measurement data may have N first angles, and the first reference angle data also correspondingly has N first reference angles. Based on a plurality of first angles and a plurality of first reference angles, accuracy of measuring an angle of the target point position by the detection apparatus can be more accurately evaluated.

Optionally, the testing method in FIG. 3 may include step S304.

Step S304: The computing module determines a first angle measurement deviation amount of the detection apparatus based on the first reference angle data and the first angle measurement data.

In some solutions, an angle measurement deviation amount may be a numerical part, namely, an absolute value. For example, the first reference angle data is denoted as *aᵢ*, and the first angle measurement data is denoted as *azᵢ*. The first angle measurement deviation amount *θᵢ* = |*aᵢ* - *azᵢ*|. For example, the first angle measurement data is -0.01°, and the first reference angle data obtained through solution by using the ranging data is -0.05°. In this case, *θᵢ*=0.04°. It can be learned that the first angle measurement deviation amount can more intuitively and accurately indicate an angle measurement capability of the detection apparatus.

In some possible implementations, the first ranging data includes N first distances, the first angle measurement data includes N first reported angles, and the first reference angle data includes N first reference angles. The computing module may determine N angle deviations based on the N first reference angles and N first horizontal reported angles, where each angle deviation is used to describe a difference between a first reference angle and a corresponding first horizontal reported angle. That is, the first angle measurement deviation amount is as follows: *θᵢ* = |*aᵢ* - *azᵢ*|, where i may be 0, ..., or N (or 0, ..., or N-1, where this is merely an example).

In some possible implementations, the computing module determines angle precision of the detection apparatus, angle accuracy of the detection apparatus, and/or based on the N angle deviations. For example, the angle precision of the detection apparatus is related to a maximum value of the N angle deviations or a standard deviation of the N angle deviations, and the angle accuracy of the detection apparatus is related to an average value of the N angle deviations.

In a manner of calculating the angle precision, the angle precision may be calculated through max(*θ*₁, *θ*₂, ..., *θ_{N}*), where max() indicates an operation of obtaining a maximum value.

In a manner of calculating the angle accuracy, the angle accuracy may be obtained through mean(*θ*₁, *θ*₂, ..., *θ_{N}*), where mean() indicates an operation of obtaining an average value.

In a possible case, the first ranging data and the first angle measurement data are detection data obtained when a pointing direction of a first angle position of the field of view of the detection apparatus is aligned with the target point position on the reflection plane, and a pointing direction of a center of the field of view is a direction of a detection signal transmitted from the first angle position. Usually, an angle of the center of the field of view is the zero azimuth. The first angle position is the center line of the field of view, namely, a normal line (OP) of a window shown in FIG. 4. In this case, in the method, an angle measurement capability of the detection apparatus for the center of the field of view may be tested.

In some possible cases, the detection apparatus may be rotated, or the field of view of the detection apparatus may be adjusted, to enable another angle position to be aligned with the target point position, and test an angle measurement capability of the detection apparatus for the another angle position.

In a possible implementation, the detection apparatus is disposed on a rotary table, and the rotary table may rotate (for example, rotate around the center of the detection apparatus), to enable a pointing direction of a second angle position of the field of view of the detection apparatus to be aligned with the target point position on the reflection plane, where the second angle position is different from the first angle position. The detection apparatus re-detects the reflection plane to obtain second angle measurement data and second ranging data of the target point position on the reflection plane, where the second angle measurement data is angle data of the target point position that is obtained by the detection apparatus through detection, and the second ranging data is distance data of the target point position that is obtained by the detection apparatus through detection. The computing module may determine second reference angle data based on the second ranging data, the first angle, and the distance between the detection apparatus and the target point position on the reflection plane. For related descriptions, refer to related descriptions of the first ranging data, the first reference angle data, and the first angle measurement data. Details are not described herein again.

Optionally, the detection apparatus may determine a second angle measurement deviation amount of the detection apparatus based on the second reference angle data and the second angle measurement data. For related descriptions, refer to the descriptions of the first angle measurement deviation amount.

In a possible case, the field of view of the detection apparatus includes M areas, M is an integer, and M≥2. The first angle position is a center line of a first area among the M areas, and the second angle position is a center line of a second area among the M areas. For example, the field of view of the detection apparatus may be divided into a nine-grid area of three rows and three columns. During testing, center lines of different areas of the detection apparatus may be aligned with the target point position, to test angle measurement capabilities of the detection apparatus for different areas of the field of view.

It should be noted that only one rotation and one re-detection are used as an example for description herein. During specific implementation, the process of rotation and re-detection may be performed for a plurality of times.

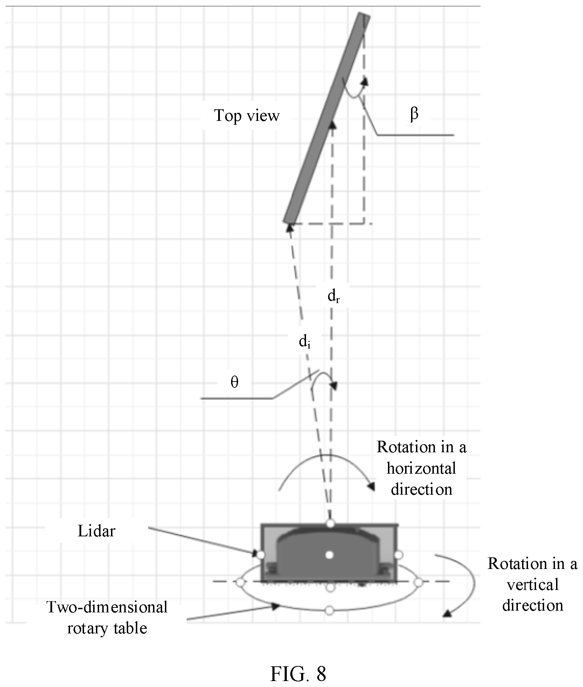

The embodiment of FIG. 3 includes a plurality of possible cases. The following describes a possible implementation of this embodiment of this application with reference to FIG. 8 by using an example in which the detection apparatus is a lidar and the reflection plane is a reflection panel. For terms, logic, and the like that are not explained in the following descriptions, refer to the foregoing descriptions.

Refer to FIG. 8. The lidar is mounted on a two-dimensional rotary table, where the two-dimensional rotary table may be a high-precision two-dimensional rotary table. For example, rotation control precision of the two-dimensional rotary table is less than 0.01°, and/or rotation control accuracy of the two-dimensional rotary table is less than 0.01°. A standard diffuse reflection panel with high flatness is placed at a distance of more than 50 m from the lidar. For example, a size of the reflection panel may be 2 m×1 m. A thickness direction is not strictly limited herein. Reflectivity of the test panel is 50%±5%, and the test panel is perpendicular to a ground direction (which may be understood as a horizontal direction). A horizontal center point of the diffuse reflection panel intersects a normal line of a window of the lidar, and an included angle between the diffuse reflection panel and the normal line is approximately 10°. Center coordinates and four-corner coordinates of the diffuse reflection panel are obtained by a total station through detection. In this way, the included angle *β* between the diffuse reflection panel and the normal line of the lidar can be calculated, and a distance *dᵣ* from a center of the lidar or a laser origin to the reflection panel can be measured.

During testing, a center position of a test area (for example, a nine-grid area of a field of view) is aligned with the reflection panel, and the lidar is started to receive a point cloud. After the point cloud is obtained, the reflection panel is recognized, and a horizontal point position at a middle position on the reflection panel and a vertical point position with a coordinate height near 0 are selected. For example, a 300-frame point cloud is obtained by the lidar through detection. For the 300-frame point cloud, a reported distance *dᵢ* and a horizontal reported angle *azᵢ*, namely, a measured value of an azimuth angle *θ*, are recorded based on the foregoing selected point position. Optionally, the horizontal reported angle *azᵢ* is compensated for by using an intrinsic parameter.

A deviation value *aeᵢ* between each point and a zero azimuth is obtained through inverse solution based on *dᵢ* and the known *β* and *dᵣ*, to learn that a first reference angle *aᵢ* = -*aeᵢ*, where *aᵢ* is a reference value of the azimuth angle *θ*. A first reference angle is obtained for each point, to obtain a set [*az*₁, *az*₂, ..., *az_{N}*], namely, first reference angle data. An angle deviation (to be specific, a deviation between a measured value and an actual value) of each point is calculated as follows: *θᵢ* = |*aᵢ* - *azᵢ*|, to learn that a first angle measurement deviation amount *θ*_{Δ} =[ *θ*₁ , *θ*₂ , ..., *θ_{N}* ]. Angle precision is calculated as follows: *θ*_{Δ}max=max(*θ*_{Δ}). A deviation mean is calculated as angle accuracy as follows: *θ*_{Δ}avg=mean(*θ*_{Δ}).

Further, another orientation of the nine grids is aligned with the reflection panel, and the foregoing test process is repeated.

The foregoing describes the method in embodiments of this application, and the following describes some apparatuses for implementing the foregoing method. It should be understood that division of units of the apparatus provided in embodiments of this application is merely logical function division. During actual implementation, all or some of the units may be integrated into one physical entity, or may be physically separated. In addition, the units of the apparatus may be implemented in a form of a processor invoking software. For example, the apparatus includes a processor. The processor is connected to a memory. The memory stores instructions. The processor invokes the instructions stored in the memory to implement any one of the foregoing methods or implement functions of the units of the apparatus. The processor is, for example, a general-purpose processor, for example, a central processing unit (Central Processing Unit, CPU) or a microprocessor. The memory is a memory inside the apparatus or a memory outside the apparatus. Alternatively, the units of the apparatus may be implemented in a form of a hardware circuit, and functions of some or all of the units may be implemented by designing the hardware circuit. The hardware circuit may be understood as one or more processors. For example, in an implementation, the hardware circuit is an application-specific integrated circuit (application-specific integrated circuit, ASIC), and functions of some or all of the foregoing units are implemented by designing a logical relationship between elements in the circuit. For another example, in another implementation, the hardware circuit may be implemented by using a programmable logic device (programmable logic device, PLD). A field programmable gate array (Field Programmable Gate Array, FPGA) is used as an example. The field programmable gate array may include a large quantity of logic gate circuits. A configuration file is used to configure a connection relationship between logic gate circuits, to implement functions of some or all of the foregoing units. All units of the foregoing apparatus may be implemented in a form of a processor invoking software; or all units may be implemented in a form of a hardware circuit; or some units may be implemented in a form of a processor invoking software, and remaining units may be implemented in a form of a hardware circuit.

In embodiments of this application, the processor is a circuit with a signal processing capability. In an implementation, the processor may be a circuit with an instruction reading and running capability, for example, a central processing unit (Central Processing Unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is an application-specific integrated circuit (application-specific integrated circuit, ASIC) or a hardware circuit, for example, an FPGA, implemented by using a programmable logic device (programmable logic device, PLD). In a reconfigurable hardware circuit, a process of loading, by a processor, a configuration file to configure the hardware circuit may be understood as a process of loading, by the processor, instructions to implement functions of some or all of the foregoing units. In addition, the processor may alternatively be a hardware circuit designed for artificial intelligence, and may be understood as an ASIC, for example, a neural network processing unit (Neural Network Processing Unit, NPU), a tensor processing unit (Tensor Processing Unit, TPU), or a deep learning processing unit (Deep learning Processing Unit, DPU).

It can be learned that the units of the foregoing apparatus may be configured as one or more processors (or processing circuits) for implementing the foregoing method, for example, a CPU, a GPU, an NPU, a TPU, a DPU, a microprocessor, a DSP, an ASIC, an FPGA, or a combination of at least two of these processor forms.

In addition, all or some of the units of the foregoing apparatus may be integrated together, or may be implemented independently. In an implementation, these units are integrated together and implemented in a form of a system-on-a-chip (system-on-a-chip, SoC). The SoC may include at least one processor, configured to implement any one of the foregoing methods or implement functions of the units of the apparatus. The at least one processor may be of different types, for example, include a CPU and an FPGA, a CPU and an artificial intelligence processor, or a CPU and a GPU.

The following lists several possible apparatuses.

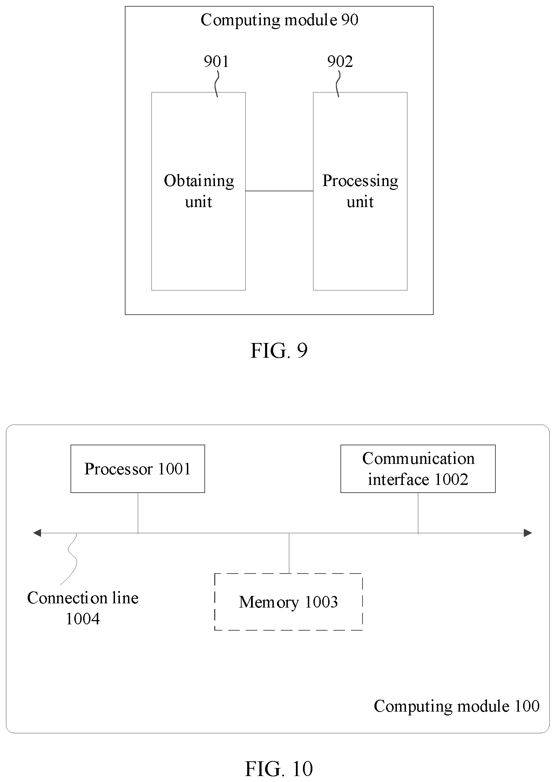

FIG. 9 is a diagram of a structure of a computing module 90 according to an embodiment of this application. Optionally, the computing module 90 may be an independent device, for example, a personal computer. Alternatively, the computing module 90 may be a component, for example, a chip or an integrated circuit, in an independent device (for example, a node). The computing module 90 is configured to implement the method performed by the computing module in the foregoing testing method, for example, the method performed by the computing module in the testing method shown in any one or more embodiments in the embodiment shown in FIG. 3.

As shown in FIG. 9, the computing module 90 includes an obtaining unit 901 and a processing unit 902. The obtaining unit 901 is configured to implement one or more of the following operations: obtaining, receiving, monitoring, transmission, connection establishment, responding, and the like; and is further configured to implement another operation of the testing method. The processing unit 902 is configured to implement one or more of the following operations: processing, calculation, determining, generation, and the like; and is further configured to implement another operation of the testing method.

For related descriptions, refer to the descriptions of the embodiment shown in FIG. 3. Details are not described herein again.

FIG. 10 is a diagram of a structure of another computing module according to an embodiment of this application. The computing module 100 may be an independent device, for example, a node; or may be a component, for example, a chip, a software module, or an integrated circuit, included in an independent device. The computing module 100 may include at least one processor 1001 and a communication interface 1002. Optionally, the computing module 100 may further include at least one memory 1003. Further, optionally, the computing module 100 may further include a connection line 1004. The processor 1001, the communication interface 1002, and/or the memory 1003 are/is connected through the connection line 1004, and/or communicate with each other through the connection line 1004 to transmit a control signal and/or a data signal.

The processor 1001 is a module for performing an arithmetic operation and/or a logic operation, and may specifically include one or more of the following modules: a filter, a modem, a power amplifier, a low noise amplifier (low noise amplifier, LNA), a baseband processor, a radio frequency processor, a radio frequency circuit, a central processing unit (central processing unit, CPU), an application processor (application processor, AP), a microcontroller unit (microcontroller unit, MCU), an electronic control unit (electronic control unit, ECU), a graphics processing unit (graphics processing unit, GPU), a microprocessor unit (microprocessor unit, MPU), an application-specific integrated circuit (application-specific integrated circuit, ASIC), an image signal processor (image signal processor, ISP), a digital signal processor (digital signal processor, DSP), a field programmable gate array (field programmable gate array, FPGA), a complex programmable logic device (complex programmable logic device, CPLD), a coprocessor, or the like.

The communication interface 1002 may be configured to provide information input or output for the at least one processor, or configured to receive a signal sent by the outside and/or send a signal to the outside.

For example, the communication interface 1002 may include an interface circuit.

For example, the communication interface 1002 may include a wired link interface such as an Ethernet cable, or may be a wireless link (Wi-Fi, Bluetooth, universal wireless transmission, an in-vehicle short-range communication technology, another short-range wireless communication technology, or the like) interface.

Optionally, the communication interface 1002 may further include a radio frequency transmitter, an antenna, and the like. When the communication interface 1002 includes an antenna, there may be one or more antennas.

In a possible design, if the computing module 100 is an independent device, the communication interface 1002 may include a receiver and a transmitter. The receiver and the transmitter may be a same component or different components. When the receiver and the transmitter are a same component, the component may be referred to as a transceiver.

In another possible design, if the computing module 100 is a chip or a circuit, the communication interface 1002 may include an input interface and an output interface, and the input interface and the output interface may be a same interface or different interfaces.

Optionally, a function of the communication interface 1002 may be implemented by a transceiver circuit or a dedicated transceiver chip.

The memory 1003 is configured to provide storage space, and the storage space may store data such as an operating system and a computer program. The memory 1003 may be one or a combination of a random access memory (random access memory, RAM), a read-only memory (read-only memory, ROM), an erasable programmable read-only memory (erasable programmable read-only memory, EPROM), a compact disc read-only memory (compact disc read-only memory, CD-ROM), or the like.

Functions and actions of the modules or the units in the computing module 100 listed above are merely examples for description.

The functional units in the computing module 100 may be configured to implement the method implemented by the computing module in the foregoing testing method, for example, the method implemented by the computing module in the testing method shown in FIG. 3.

Optionally, the processor 1001 may be a processor specially configured to perform the foregoing method (for ease of differentiation, the processor is referred to as a dedicated processor), or may be a processor that invokes a computer program to perform the foregoing method (for ease of differentiation, the processor is referred to as a dedicated processor). Optionally, the at least one processor may alternatively include both a dedicated processor and a general-purpose processor.

Optionally, when the computing module 100 includes the at least one memory 1003, if the processor 1001 invokes a computer program to implement the foregoing testing method, the computer program may be stored in the memory 1003.

An embodiment of this application further provides a chip. The chip includes a logic circuit and a communication interface. The communication interface is configured to receive a signal or send a signal, and the logic circuit is configured to receive a signal or send a signal through the communication interface. The chip is configured to implement the foregoing testing method, for example, the testing method shown in FIG. 3.

An embodiment of this application further provides a computer-readable storage medium. The computer-readable storage medium stores instructions. When the instructions are run on at least one processor (or a computing module), the foregoing testing method, for example, the testing method shown in FIG. 3, is implemented.

An embodiment of this application further provides a computer program product. The computer program product includes computer instructions. The computing instructions are used to implement the foregoing testing method, for example, the testing method shown in FIG. 3.

An embodiment of this application further provides a terminal. The terminal includes the foregoing computing module 90 and/or computing module 100.

In a possible implementation, the terminal includes a terminal node, and the terminal may be an intelligent terminal or a transportation tool, such as a vehicle, an uncrewed aerial vehicle, or a robot.

In the descriptions of this application, orientation or position relationships indicated by the terms "center", "above", "below", "vertical", "horizontal", "inside", "outside", "left", "side", and the like are orientation or position relationships shown based on the accompanying drawings, and are merely intended to facilitate description of this application and simplify description, but not to indicate or imply that an indicated apparatus or component needs to have a specific orientation or needs to be construed or operated in a specific orientation. Therefore, the terms cannot be construed as a limitation on this application.

In embodiments of this application, the "end" in the terms "an end", "another end", "left end", "right end", "upper end", "lower end", "connection end", and the like is not limited to an end tip, an end point, or an end face, but also includes a part of the end tip, the end point, or the end face that extends by an axial distance and/or a radial distance on an apparatus or a component to which the end tip, the end point, or the end face belongs.

In embodiments of this application, the term "in an example", "for example", or the like is used to give an example, an illustration, or a description. Any embodiment or design scheme described with "in an example" or "for example" in this application should not be construed as being more preferred or advantageous than another embodiment or design scheme. To be precise, the term "in an example", "for example", or the like is intended to present a related concept in a specific manner.

In embodiments of this application, "at least one" means one or more, and "a plurality of" means two or more. "At least one of the following items (pieces)" or a similar expression thereof indicates any combination of the items, including one of the items (pieces) or any combination of a plurality of the items (pieces). For example, at least one of a, b, or c may indicate a, b, c, (a and b), (a and c), (b and c), or (a, b, and c), where a, b, and c may be in a singular form or a plural form. "And/or" describes an association relationship between associated objects, and indicates that three relationships may exist. For example, A and/or B may indicate the following three cases: Only A exists, both A and B exist, and only B exists, where A and B may be in a singular form or a plural form. The character "/" usually indicates an "or" relationship between the associated objects.

In addition, unless otherwise specified, ordinal numbers such as "first" and "second" in embodiments of this application are intended to distinguish between a plurality of objects, but not to limit an order, a time sequence, priorities, or importance of the plurality of objects. For another example, the first angle measurement data and the second angle measurement data are merely intended for ease of describing fresh parameters in different implementations, and do not indicate a difference in operations, importance, data content, or the like.

Persons of ordinary skill in the art can understand that all or some of the steps in the foregoing embodiments may be implemented by hardware or by a program instructing related hardware. The program may be stored in a computer-readable storage medium. The storage medium may be a read-only memory, a magnetic disk, a compact disc, or the like.

## Claims

1. A testing method, wherein the method comprises:
detecting, by a detection apparatus, a reflection plane to obtain first angle measurement data and first ranging data of a target point position on the reflection plane, wherein the first angle measurement data is angle data of the target point position that is obtained by the detection apparatus through detection, the first ranging data is distance data of the target point position that is obtained by the detection apparatus through detection, the reflection plane is perpendicular to a horizontal plane in a first direction, and in a horizontal direction, a connection line between a center of the detection apparatus and a horizontal center of the reflection plane forms an acute angle with the reflection plane;
obtaining a distance between the detection apparatus and the target point position on the reflection plane and a first angle, wherein the first angle is an included angle between the reflection plane and a connection line between the center of the detection apparatus and the target point position in the horizontal direction; and
determining first reference angle data based on the first ranging data, the first angle, and the distance between the detection apparatus and the target point position on the reflection plane.

2. The testing method according to claim 1, wherein
the first reference angle data *aᵢ* satisfies the following formula: ${a}_{i} = arcsin \left(\frac{{d}_{r} sinβ}{{d}_{i}}\right) - β ,$ wherein
*dᵢ* is the first ranging data, *β* is the first angle, and *dᵣ* is the distance between the detection apparatus and the target point position on the reflection plane.

3. The testing method according to claim 1 or 2, wherein the reflection plane is a reflection panel.

4. The method according to any one of claims 1 to 3, wherein the method further comprises:
determining a first angle measurement deviation amount of the detection apparatus based on the first reference angle data and the first angle measurement data.

5. The testing method according to any one of claims 1 to 3, wherein the first ranging data comprises N first distances, the first angle measurement data comprises N first reported angles, N is an integer, and N≥1; and
the first reference angle data comprises N first reference angles.

6. The testing method according to claim 5, wherein the method further comprises:
determining N angle deviations based on the N first reference angles and the N first horizontal reported angles, wherein each angle deviation is used to describe a difference between a first reference angle and a corresponding first horizontal reported angle; and
determining angle precision of the detection apparatus and/or angle accuracy of the detection apparatus based on the N angle deviations.

7. The testing method according to claim 6, wherein the angle precision of the detection apparatus is related to a maximum value of the N angle deviations or a standard deviation of the N angle deviations, and the angle accuracy of the detection apparatus is related to an average value of the N angle deviations.

8. The testing method according to any one of claims 1 to 7, wherein the target point position is at the horizontal center of the reflection plane, and a height of the target point position in a vertical direction is the same as a height of the center of the detection apparatus in the vertical direction; and
the vertical direction is a direction perpendicular to the horizontal plane.

9. The testing method according to any one of claims 1 to 8, wherein the detection apparatus comprises a window, wherein a normal line of the window intersects the horizontal center of the reflection plane.

10. The testing method according to any one of claims 1 to 9, wherein the first ranging data and the first angle measurement data are detection data obtained when a pointing direction of a first angle position of a field of view of the detection apparatus is aligned with the target point position on the reflection plane; and
a pointing direction of a center of the field of view is a direction of a detection signal transmitted from the first angle position.

11. The testing method according to claim 10, wherein the first angle position is a center line of the field of view.

12. The testing method according to any one of claims 1 to 11, wherein a distance between the reflection plane and the detection apparatus is greater than a first distance threshold; and
the first distance threshold is 50 meters.

13. The testing method according to any one of claims 1 to 12, wherein reflectivity of the reflection plane is within a range of 50%±5%.

14. The testing method according to any one of claims 1 to 13, wherein the first angle is 10°.

15. The testing method according to claim 10 or 11, wherein the detection apparatus is disposed on a rotary table, and the method further comprises:
rotating, by the rotary table, around the center of the detection apparatus, to enable a pointing direction of a second angle position of the field of view of the detection apparatus to be aligned with the target point position on the reflection plane, wherein the second angle position is different from the first angle position;
re-detecting, by the detection apparatus, the reflection plane to obtain second angle measurement data and second ranging data of the target point position on the reflection plane, wherein the second angle measurement data is angle data of the target point position that is obtained by the detection apparatus through detection, and the second ranging data is distance data of the target point position that is obtained by the detection apparatus through detection; and
determining second reference angle data based on the second ranging data, the first angle, and the distance between the detection apparatus and the target point position on the reflection plane.

16. The testing method according to claim 15, wherein the method further comprises:
determining a second angle measurement deviation amount of the detection apparatus based on the second angle reference data and the second angle measurement data.

17. The testing method according to claim 15 or 16, wherein the field of view of the detection apparatus comprises M areas, M is an integer, and M≥2; and
the first angle position is a center line of a first area among the M areas, and the second angle position is a center line of a second area among the M areas.

18. A testing system, wherein the testing system comprises a detection apparatus, a reflection plane, and a computing module, wherein
the reflection plane is perpendicular to a horizontal plane in a first direction, and in a horizontal direction, a connection line between a center of the detection apparatus and a horizontal center of the reflection plane forms an acute angle with the reflection plane;
the detection apparatus is configured to detect the reflection plane to obtain first angle measurement data and first ranging data of a target point position on the reflection plane; and
the computing module is configured to:
obtain a distance between the detection apparatus and the target point position on the reflection plane and a first angle, wherein the first angle is an included angle between the reflection plane and a connection line between the center of the detection apparatus and the target point position in the horizontal direction; and
determine first reference angle data based on the first ranging data, the first angle, and the distance between the detection apparatus and the target point position on the reflection plane.

19. The testing system according to claim 18, wherein the testing system is further configured to implement the testing method according to any one of claims 2 to 11.

20. The testing system according to claim 18, wherein the testing system further comprises a rotary table, the detection apparatus is disposed on the rotary table, and the rotary table is configured to rotate the detection apparatus to adjust a direction of a field of view of the detection apparatus; and
the testing system is configured to implement the testing method according to any one of claims 15 to 17.

21. The testing system according to claim 20, wherein the rotary table is a two-dimensional rotary table, and the two-dimensional rotary table is configured to rotate the detection apparatus in the horizontal direction and/or a vertical direction; or
the rotary table is a one-dimensional rotary table, and the one-dimensional rotary table is configured to rotate the detection apparatus in the horizontal direction.

22. The testing system according to any one of claims 18 to 21, wherein a distance between the reflection plane and the detection apparatus is greater than a first distance threshold; and
the first distance threshold is 50 meters.

23. The testing system according to any one of claims 18 to 22, wherein reflectivity of the reflection plane is within a range of 50%±5%.

24. The testing system according to any one of claims 18 to 23, wherein the first angle is 10°.
